(19) Europäisches Patentamt
European Patent Office
Office européen des brevets

(11) Publication number: 0 534 571 A1

(12) # EUROPEAN PATENT APPLICATION

(21) Application number: 92202961.6

(51) Int. Cl.[5]: C08K 7/04, C08L 73/00

(22) Date of filing: 25.09.92

(30) Priority: 27.09.91 US 766256

(43) Date of publication of application:
31.03.93 Bulletin 93/13

(84) Designated Contracting States:
BE DE ES FR GB IT NL SE

(71) Applicant: SHELL INTERNATIONALE RESEARCH MAATSCHAPPIJ B.V.
Carel van Bylandtlaan 30
NL-2596 HR Den Haag(NL)

(72) Inventor: Machado, Joseph Michael
98 Melrose Drive
Destrehan, LA 70047-9726(US)

(54) **A filled composition of a linear alternating polymer of carbon monoxide with at least one ethylenically unsaturated compound.**

(57) A filled polymer composition comprising, on a volume basis, a major quantity of a linear alternating polymer of carbon monoxide with at least one ethylenically unsaturated compound and a minor quantity of a mineral wool fibre.

EP 0 534 571 A1

This invention relates to a polymer composition comprising, on a volume base, a major quantity of a polyketone polymer and a minor quantity of a mineral filler.

The relevant polyketone polymers are linear alternating polymers of carbon monoxide and at least one ethylenically unsaturated compound. Polymers of this type are disclosed in, for example, European patent applications 121,965, 181,014, 213,671, and 257,663 and in U.S. patents 4,880,865, and 4,822,871.

The polyketone polymers are relatively high molecular weight materials having established utility as premium thermoplastics in the production of shaped articles, such as containers for food and beverages and parts for the automotive industry, which are produced by processing the polyketone polymer according to well known methods. For some particular applications it is desirable to have properties which are somewhat different from those of the polyketone polymers. The more desirable properties of the polyketone polymers may be retained, and yet other properties improved, through the provision of a filled polymer compound. Reinforcing a polymer with a filler often provides a less expensive product, in addition to desirable properties for various applications.

Mineral-filled polyketone compounds with certain desirable properties are disclosed in U.S. patent 4,851,470. The neat polyketone polymer has an unfortunate tendency to form chemical crosslinks at melt processing temperatures, as evidenced by a steady increase in melt viscosity as the polymer is processed. It is therefore an object of this invention to provide a mineral-filled polyketone polymer compound which exhibits an improved melt stability during melt processing.

Surprisingly it has now been found that polyketone polymer compositions filled with a mineral wool fibre exhibit an increase of the melt viscosity during processing which is unexpectedly lower than the viscosity increase which is typical for compounds filled with other fibrous mineral fillers. Hence, they exhibit an improved melt stability. In addition they exhibit mechanical properties, such as strength and stiffness, as well as a dimensional stability, at least equal to those of compositions filled with such other fibrous mineral fillers.

The present invention therefore provides a filled polymer composition comprising, on a volume basis, a major quantity of a linear alternating polymer of carbon monoxide with at least one ethylenically unsaturated compound and a minor quantity of a mineral wool fibre. The invention also includes articles of manufacture prepared from, and coated with, such filled compositions.

The polyketone polymers which are employed as the major component of the filled polymer compositions of the invention are of a linear alternating structure and contain substantially one molecule of carbon monoxide for each molecule of ethylenically unsaturated compound. The ethylenically unsaturated compound is preferably a hydrocarbon. Suitable ethylenically unsaturated hydrocarbons for use as monomers in the polyketone polymers have up to 20 carbon atoms inclusive, preferably up to 10 carbon atoms, and are aliphatic such as ethylene and other α-olefins including propylene, 1-butene, isobutylene, 1-hexene, 1-octene and 1-dodecene, or are arylaliphatic containing an aryl substituent on an otherwise aliphatic molecule, particularly an aryl substituent on a carbon atom of the ethylenic unsaturation. Illustrative of this latter class of ethylenically unsaturated hydrocarbons are styrene, p-methylstyrene, p-ethylstyrene and m-isopropylstyrene. The preferred polyketone polymers are copolymers of carbon monoxide and ethylene or terpolymers of carbon monoxide, ethylene and a second ethylenically unsaturated hydrocarbon of at least 3 carbon atoms, particularly an α-olefin such as propylene.

When the preferred polyketone terpolymers are employed as a component of the blends of the invention, there will be within the terpolymer at least 2 units incorporating a moiety of ethylene for each unit incorporating a moiety of the second hydrocarbon. Preferably, there will be from 10 units to 100 units incorporating a moiety of ethylene for each unit incorporating a moiety of the second hydrocarbon. The polymer chain of the preferred polyketone terpolymers is therefore represented by the repeating formula

$$-[-CO-(-CH_2-CH_2-)-]_x-[-CO-(-G-)-]_y-$$

wherein G is the moiety of an ethylenically unsaturated hydrocarbon of at least 3 carbon atoms polymerized through the ethylenic unsaturation and the ratio of y:x is less than 0.5. The $-CO(CH_2CH_2)$ units and the $-CO(G)$ units are found randomly throughout the polymer chain, and preferred ratios of y:x are from 0.01 to 0.1. When copolymers of carbon monoxide and ethylene are employed in the blends of the invention, there will be no second hydrocarbon present and the copolymers are represented by the above formula wherein y is zero. The end groups of the polymer chain will depend upon the materials present during the production of the polymer and whether or how the polymer was purified. The precise nature of the end groups does not appear to influence the properties of the polymer to any considerable extent so that the

preferred polyketone polymers are fairly represented by the formula for the polymer chain as depicted above.

Of particular interest are the polyketone polymers which have a melting point of from 175 °C to 300 °C, more typically from 210 °C to 270 °C. The polymers have eligibly a limiting viscosity number (LVN), measured in m-cresol at 60 °C in a standard capillary viscosity measuring device, from 0.5 dl/g to 10 dl/g, more preferably from 0.8 dl/g to 4 dl/g.

U.S. patent 4,843,144 discloses a process for preparing polymers of carbon monoxide and at least one ethylenically unsaturated compound using a catalyst comprising a compound of palladium, the anion of a non-hydrohalogenic acid having a pKa of below about 6 and a bidentate ligand of phosphorus. The polymerization to produce the polyketone polymer is typically conducted in an inert reaction diluent, preferably an alkanolic diluent, and methanol is particularly preferred. Typical polymerization conditions include a reaction temperature from 20 °C to 150 °C, preferably from 50 °C to 135 °C. The reaction pressure is suitably from 1 atmosphere to 200 atmospheres and pressures from 10 atmospheres to 100 atmospheres are preferred. The polyketone polymer is typically obtained as a product substantially insoluble in the reaction diluent and the product is recovered by conventional methods such as filtration or decantation. The polyketone polymer is suitably used as recovered or the polymer may be purified by contact with a solvent or extraction agent which is selective for catalyst residues.

The second component of the filled polymer compounds of the invention comprises mineral wool fibre (fiberized blast furnace slag), or rock wool. Particularly preferred are processed mineral fibres, which are available from Jim Walter Resources, Inc. These processed mineral fibres are a milled form of mineral wool, from which most of the shot (non-fibrous material) has been removed. U.S. patent 4,026,478 describes a process for making such fibres.

The processed mineral fibres comprise primarily calcium silicate, with 25 wt% oxides of aluminium, magnesium, and other lightweight metals also present. Fibre diameters typically range from 1 µm to 10 µm, with an average diameter of 5 µm and the fibre lengths typically range from 50 µm to 500 µm with an average length of 275 µm. The processed mineral fibres contain less than 5 wt% non-fibrous material.

Mineral wool fibres, and processed mineral fibres, are synthetic (i.e. manufactured) materials. Most commercial mineral fillers are naturally occurring materials, although they may be refined to obtain a particular size range, and/or coated with a sizing material or coupling agent. Some naturally occurring mineral fillers, such as asbestos, exist in a fibrous form.

The filled polymer compounds of the invention comprise a major quantity, on a volume basis, of the linear alternating polymer of carbon monoxide with at least one ethylenically unsaturated hydrocarbon and a minor quantity of mineral wool fibre. The amount of mineral wool fibre present in the filled compounds of the invention is not critical, as long as other important polymer properties for the intended use are not adversely affected. Amounts of mineral wool fibre present in the filled compounds, on a volume basis, may be from 5 vol% to 40 vol%, based on total composition, with amounts from 20 vol% to 30 vol% mineral wool fibre being preferred. On a weight basis, the amount of mineral wool fibre present may be greater than 50 wt%, due to its greater density. Amounts of mineral wool fibre present in the filled compounds, on a weight basis, may be from 10 wt% to 60 wt% mineral wool fibre, based on total composition, with amounts from 35 wt% to 50 wt% mineral wool fibre being preferred for a wide variety of uses.

The method of producing the filled polymer compounds of the invention is not material. Preferably this method provides a relatively uniform distribution of the mineral wool fibre throughout the polyketone. The mineral wool fibre filler exists as a discrete phase in the polyketone matrix. The method of producing the compounds may be conventional for producing filled polymer compositions. In one modification, the mineral wool fibre filler and polyketone are mixed and passed through an extruder operating at high speed to produce the filled compound as an extrudate. In an alternate modification, the components are blended in a mixing device which exhibits high shear.

The filled polymer compounds of the invention may also include other additives such as antioxidants, dyes, other fillers or reinforcing agents, fire resistant materials, mould release agents, colorants and other materials designed to improve the processability of the polymers or the properties of the resulting compound. Such additives are added prior to, together with, or subsequent to the blending of the polyketone and the mineral wool fibre. The presence of these additives may affect the optimum level of mineral wool fibre for a given application.

The compounds are processed by methods such as extrusion and injection moulding into sheets, films, plates and shaped parts. The compositions of the invention are particularly useful for the production of articles by multiple melting/crystallization cycles, and where elevated temperatures are likely to be encountered. Illustrative of such applications are the production of articles useful in both rigid and flexible packaging applications, and in both internal and external parts for automotive use.

The invention is further illustrated by the following Examples which should not be regarded as limiting.

Example 1

A linear alternating terpolymer of carbon monoxide, ethylene, and propylene was produced in the presence of a catalyst composition formed from palladium acetate, trifluoroacetic acid and 1,3-bis[bis(2-methoxyphenyl)phosphino]propane. The polyketone polymer had a melting point of 223 °C and an LVN of 1.1 dl/g when measured in m-cresol at 60 °C. The polyketone polymer contained 0.5% Ethanox 330 and 0.5% Nucrel 535 (Ethanox and Nucrel are Trade Marks).

Example 2

Filled compounds were prepared using the polymer of Example 1 and two different commercially available types of mineral wool fibre. The first was an untreated processed mineral fibre, marked hereinafter as PMF 204, and the second was a processed mineral fibre treated with a fatty-acid-type material for improved fibre dispersion during blending, marked hereinafter as PMF 204CX. For comparison with the filled compounds of the invention, samples containing wallastonite with two different types of surface coating ("A" and "B") and gypsum whisker fibres were prepared in the same manner. Wallastonite is a naturally occurring calcium silicate mineral, which forms cylindrical particles upon grinding. Gypsum whisker fibres are manufactured from gypsum (calcium sulfate) and are commercially available as Franklin Fiber. The filled compounds prepared are shown in Table 1.

All of the compounds were prepared by tumbling polyketone polymer powder with the mineral filler at the prescribed composition. Subsequently, melt compounding was performed in a 30 mm co-rotating twin screw extruder, operating at about 200 rpm with a melt temperature of about 250 °C. The viscosity of each sample was determined over time in the melt in a parallel plate rheometer operating at 275 °C at a frequency of 1 Hz. Table 1 lists the initial melt viscosity and the viscosity after both 10 and 28 minutes, as well as a ratio of the melt viscosity after 28 minutes to the initial melt viscosity.

Table 1

| Filler | Polyketone wt% (vol%) | Filler wt% (vol%) | Viscosity (Pa-sec) 0 min | 10 min | 28 min | Viscosity Ratio |
|---|---|---|---|---|---|---|
| None | 100 (100) | 0 (0) | 63 | 113 | 1030 | 16 |
| PMF 204 | 80 (90) | 20 (10) | 185 | 410 | 2049 | 11 |
| PMF 204 | 64 (80) | 36 (20) | 600 | 1354 | 3453 | 5.8 |
| PMF 204 | 51 (70) | 49 (30) | 1800 | 3453 | 21,640 | 12 |
| PMF 204CX | 80 (90) | 20 (10) | 300 | 650 | 2872 | 9.6 |
| Wallastonite A | 79 (90) | 21 (10) | 89 | 1455 | 30,270 | 340 |
| Wallastonite B | 79 (90) | 21 (10) | 89 | 522 | 7547 | 85 |
| Gypsum Whiskers | 78 (90) | 22 (10) | 280 | 668 | 9919 | 35 |

The addition of a solid filler to the polyketone polymer inherently results in a viscosity increase in the melt state for the filled compound. The ratio of melt viscosity after 28 minutes to the initial melt viscosity provides a measure of the stability of the melt with or without fillers added.

The compounds filled with processed mineral fibre demonstrated a superior melt stability, based on these rheometric data, relative to the other filled compounds. Only the processed mineral fibre filled compounds gave a viscosity ratio which was less than that of the neat polyketone polymer, indicating stabilization. The viscosity ratios for the compounds filled with wallastonite and gypsum whiskers (both commercial fillers) were significantly higher, indicating destabilization in the melt state.

Example 3

Subsequent to compounding, specimens of the filled compounds of Example 2 were moulded into plaques on a 25 ton injection moulding machine. Moulded specimens were stored over desiccant until testing. Further testing was performed on "dry as moulded" specimens.

Results of the thermal testing are shown in Table 2. The processed mineral fibre provided a significant improvement in the average coefficient of linear thermal expansion (CLTE) over the range from room

temperature to 200 °C, both in the direction parallel to, and perpendicular to the flow pattern in the injection moulded test bar. The heat deflection temperature (HDT, determined at 1.82 MPa (264 psi)) was not significantly improved.

Table 2

| Filler | Polyketone wt% (vol%) | Filler wt% (vol%) | CLTE (ppm/°C) | | HDT (°C) |
|---|---|---|---|---|---|
| | | | Parallel | Perpendicular | |
| None | 100 (100) | 0 (0) | 147 | 149 | 103 |
| PMF 204 | 80 (90) | 20 (10) | 72 | 114 | 107 |
| PMF 204 | 64 (80) | 36 (20) | 60 | 87 | 113 |
| PMF 204 | 51 (70) | 49 (30) | 50 | 111 | 118 |
| PMF 204CX | 80 (90) | 20 (10) | 80 | 121 | 97 |
| Wallastonite A | 79 (90) | 21 (10) | 93 | 92 | 144 |
| Wallastonite B | 79 (90) | 21 (10) | 82 | 125 | 116 |
| Gypsum Whiskers | 78 (90) | 22 (10) | 92 | 95 | 109 |

Results of further mechanical testing are shown in Table 3. The mechanical property data indicate that processed mineral fibre is an attractive filler for the polyketone polymer, and provides filled compounds with properties which are comparable to those made with other fillers, such as wallastonite and gypsum whiskers.

Table 3

| Filler | Polyketone wt% (vol%) | Filler wt% (vol%) | Flexural Modulus GPa (kpsi) | Flexural Strength MPa (psi) | Tensile Strength MPa (psi) | Elongation (%) | Impact Properties Izod J/m (ft-lb/in) | Impact Properties Gardner J (in-lbs) |
|---|---|---|---|---|---|---|---|---|
| None | 100 (100) | 0 (0) | 1.79 (259) | 63.8 (9,260) | 63.0 (9,130) | 86 | 103 (1.93) | 14.2 (126) |
| PMF 204 | 80 (90) | 20 (10) | 2.80 (406) | 69.7 (10,110) | 53.8 (7,810) | 37 | 68 (1.28) | 1.7 (15) |
| PMF 204 | 64 (80) | 36 (20) | 3.39 (491) | 68.2 (9,890) | 43.0 (6,240) | 23 | 51 (0.96) | 1.1 (10) |
| PMF 204 | 51 (70) | 49 (30) | 4.20 (609) | 67.2 (9,740) | 37.3 (5,410) | 17 | 48 (0.89) | 1.0 (9) |
| PMF 204CX | 80 (90) | 20 (10) | 2.86 (415) | 70.9 (10,280) | 54.5 (7,900) | 38 | 75 (1.40) | 1.8 (16) |
| Wallastonite A | 79 (90) | 21 (10) | 2.95 (428) | 76.2 (11,050) | 55.0 (7,980) | 19 | 59 (1.11) | 0.9 (8) |
| Wallastonite B | 79 (90) | 21 (10) | 2.70 (391) | 70.7 (10,260) | 54.3 (7,870) | 19 | 60 (1.12) | 1.1 (10) |
| Gypsum Whiskers | 78 (90) | 22 (10) | 2.66 (386) | 70.5 (10,220) | 53.4 (7,750) | 28 | 56 (1.05) | 4.3 (38) |

## Claims

**1.** A filled polymer composition comprising, on a volume basis, a major quantity of a linear alternating polymer of carbon monoxide with at least one ethylenically unsaturated compound and a minor quantity

of a mineral wool fibre.

**2.** A composition as claimed in claim 1 wherein the linear alternating polymer is of the repeating formula

$$-\!\!\left[CO\!-\!\left(CH_2\!-\!CH_2\right)\right]_x\!-\!\left[CO\!-\!\left(G\right)\right]_y\!-$$

wherein G is a moiety of an ethylenically unsaturated hydrocarbon of at least 3 carbon atoms and the ratio of y:x is less than 0.5.

**3.** A composition as claimed in claim 2 wherein the ratio of y:x is from 0.01 to 0.1.

**4.** A composition as claimed in claim 2 or 3 wherein G is a monomer of propylene.

**5.** A composition as claimed in claim 2 wherein y is 0.

**6.** A composition as claimed in any of claims 1-5 wherein the mineral wool fibre is a processed mineral fibre.

**7.** A composition as claimed in any of claims 1-6 wherein the mineral wool fibre is present in a quantity of from 5 vol% to 40 vol%, based on total composition.

**8.** A composition as claimed in claim 7 wherein the mineral wool fibre is present in a quantity of from 20 vol% to 30 vol%, based on total composition.

**9.** A composition as claimed in claims 1-8 wherein the fibre diameters range from 1 µm to 10 µm and the fibre lengths range from 50 µm to 500 µm.

European Patent Office

# EUROPEAN SEARCH REPORT

Application Number

EP 92 20 2961

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
| --- | --- | --- | --- |
| A | US-H-H812 (E.R.GEORGE)<br>7 August 1990<br>--- | | C08K7/04<br>C08L73/00 |
| A | EP-A-0 322 959 (SHELL)<br>5 July 1989<br>--- | | |
| A | GB-A-2 217 720 (SHELL)<br>1 November 1989<br>----- | | |
| | | | **TECHNICAL FIELDS SEARCHED (Int. Cl.5 )** |
| | | | C08K<br>C08L<br>C08G |

The present search report has been drawn up for all claims

| Place of search | Date of completion of the search | Examiner |
| --- | --- | --- |
| THE HAGUE | 26 NOVEMBER 1992 | STIENON P.M.E. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)